# EUROPÄISCHE PATENTSCHRIFT

(11) **EP 3 924 883 B1**
(45) Veröffentlichungstag und Bekanntmachung des Hinweises auf die Patenterteilung: **24.08.2022**
(21) Anmeldenummer: 21713932.8
(22) Anmeldetag: 18.03.2021
(51) Int. Cl.: G06K 19/077

(54) **FELDGERÄT UND MITTEL ZUM KENNZEICHNEN EINES FELDGERÄTES**
FIELD DEVICE AND MEANS FOR IDENTIFYING A FIELD DEVICE
DISPOSITIF DE TERRAIN ET MOYEN D'IDENTIFICATION D'UN DISPOSITIF DE TERRAIN

(30) Priorität: 01.04.2020 DE 202020101780 U
(43) Veröffentlichungstag der Anmeldung: 22.12.2021
(73) Patentinhaber: Samson Aktiengesellschaft, 60314 Frankfurt (DE)
(72) Erfinder: WETZ, Thorsten, 35519 Rockenberg (DE)
(74) Vertreter: Köllner & Partner mbB
(86) Internationale Anmeldenummer: PCT/EP2021/057016
(87) Internationale Veröffentlichungsnummer: WO 2021/197868

(56) Entgegenhaltungen:
- CN-U- 210 164 346
- GB-A- 2 480 622
- US-A1- 2013 161 363

## Beschreibung

### Gebiet der Erfindung

Die Erfindung betrifft Mittel zum Kennzeichnen eines Feldgerätes. Die Kennzeichnung von Produkten in der Prozessindustrie wird immer wichtiger und ist z.B. in der DIN SPEC 91406 spezifiziert. In dieser Spezifikation wird beschrieben, dass Produkte in der Prozessindustrie mittels 2D-Code oder RFID-Transponder gekennzeichnet werden sollen. In diesen und anderen Fällen wird oft der RFID-HF Standard vorausgesetzt. Die HF-Frequenz von 13,56 MHz hat den großen Vorteil, dass diese weltweit gleich und überall verfügbar ist. RFID-HF-Transponder können allerdings nur auf kleine Distanzen ausgelesen werden (Auslesedistanz abhängig vom Lesegerät und Umgebung ca. 2-7 cm).

### Stand der Technik

Es ist allgemein bekannt, Feldgeräte zu kennzeichnen. Hierzu können Schilder bzw. Aufkleber oder auch RFID-Tags oder ähnliches verwendet werden. Um diese ab- bzw. auszulesen, ist es allerdings erforderlich, relativ dicht an das Feldgerät heranzukommen. Dies ist oft schwierig oder sogar unmöglich, da Feldgeräte vielfach entfernt von Zugangswegen verbaut sind oder durch Rohrleitungen oder andere Konstruktionen verdeckt werden. Falls Barcodes oder ähnliche codierte Grafiken als Kennzeichnung verwendet werden, oder auch RFID-Tags oder Ähnliches, muss sogar ein Lesegerät bis auf wenige cm an die Stelle des Feldgerätes mit der Kennzeichnung herangeführt werden. Dies ist erst recht schwierig, denn das Auslesegerät selbst kann für den Zugang zu der Kennzeichnung des Feldgerätes zu sperrig sein, oder die Armlänge des Bedieners zu kurz.

Die Veröffentlichung WO 99/010673 A1 offenbart einen Ausleseempfänger mit einer Kabelverlängerung für ein mobiles Auslesegerät, mit dem RFID-Tags ausgelesen werden können. Damit soll ermöglicht werden, den Empfänger des Auslesegerätes, der in der Regel ziemlich kompakt ist, von Hand dicht an einen RFID-Tag an einem Feldgerät heranzuführen. Dadurch soll der Höchstabstand zum Auslesen der Daten erreicht werden, ohne das gesamte, größere mobile Auslesegerät zu nah an das Feldgerät heranführen zu müssen. Allerdings ist es mittels dieser einfachen Kabelverlängerung nur in wenigen Fällen tatsächlich möglich, dicht genug an die Kennzeichnung des Feldgerätes heranzukommen, insbesondere, wenn das Feldgerät schwer zugänglich ist. Außerdem ist immer ein spezielles Auslesegerät erforderlich.

Das Dokument US 2010/0001837 A1 offenbart eine RFID-Induktionsschleife, welche ebenfalls als Verlängerung dienen kann. Auch solche Antennenverlängerungen ermöglichen keine ausreichende Flexibilität, um die Kennzeichnungen aller Feldgeräte in einer Anlage in einfacher Weise auslesen zu können.

Aus der Veröffentlichung CN 210 164 346 U ist ein teleskopischer elektronischer RFID-Zugangsschlüssel bekannt. Dieser dient insbesondere zum Öffnen von Räumen bzw. Gebäuden. Der Zugangsschlüssel enthält einen RFID-Chip, der Informationen über die Person enthält, die ihn als Zugangsberechtigung nutzt, und wird mittels einer Schlaufe oder Schnalle getragen.

Die Veröffentlichung US 2013/161363 A1 offenbart eine verstellbare Clip-Anordnung für eine Rolle zur Befestigung eines Ausweises oder einer Erkennungsmarke an Kleidung, z.B. zur Interaktion der Trägerperson mit einer Stechuhr. Eine Anwendung des Befestigungsclips bei Feldgeräten ist nicht möglich.

Dokument GB 2 480 622 beschreibt einen Halter für einen USB-Stick, wobei der USB-Stick mit einem Kabel oder einer Kette mit dem Halter verbunden ist. Der Halter kann insbesondere auch als Gürtelschnalle dienen.

### Aufgabe

Aufgabe der Erfindung ist es, Mittel zum Kennzeichnen eines Feldgerätes anzugeben, die auch bei schwer zugänglichen Feldgeräten eine gute Ablesbarkeit und Auffindbarkeit ermöglichen.

### Lösung

Diese Aufgabe wird durch die Gegenstände der unabhängigen Ansprüche gelöst. Vorteilhafte Weiterbildungen der Gegenstände der unabhängigen Ansprüche sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Zur Lösung der Aufgabe werden Mittel zum Kennzeichnen eines Feldgerätes vorgeschlagen. Diese Mittel weisen ein flexibles (nicht starres), längenveränderliches Verbindungselement, das derart ausgestaltet ist, dass es nach einer Längenveränderung zu seiner Ausgangslänge zurückkehrt, sowie eine elektronische Übertragungseinheit zum Übermitteln von Daten an eine mobile Ausleseeinheit auf. Die Mittel zum Kennzeichnen eines Feldgerätes weisen ferner einen Datenträger auf, auf dem die Daten, welche Informationen über das Feldgerät enthalten, gespeichert sind. Damit wird das Feldgerät unter anderem gekennzeichnet, also z.B. mit einer Seriennummer und/oder Funktionsbezeichnung. Die Übertragungseinheit ist an einem Ende des Verbindungselementes fixiert, und das andere Ende des Verbindungselementes ist mit dem Feldgerät verbindbar.

Die elektronische Übertragungseinheit ermöglicht das Auslesen von Daten des Feldgeräts und/oder seiner Steuerungund/oder das Übermitteln von Daten an die Steuerung des Feldgerätes zu ihrer Konfiguration.. Diese Daten können ggf. auf dem Datenträger zwischengespeichert werden.

Damit ist es möglich, ein Feldgerät eindeutig zu kennzeichnen, und zugleich ist die Kennzeichnung mit herkömmlichen Methoden ablesbar, da die Übertragungseinheit zum Ablesegerät hingezogen werden kann. Durch das flexible, längenveränderliche und elastische Verbindungselement bleibt die Übertragungseinheit nach der Montage stets mit dem Feldgerät verbunden und kann außerdem nach dem Ablesen selbsttätig in eine Ruhe- bzw. Aufbewahrungsposition am oder in unmittelbarer Nähe zum Feldgerät zurückkehren.

Besonders günstig ist es, wenn der Datenträger Teil der elektronischen Übertragungseinheit oder unmittelbar damit verbunden ist. Dann muss das Verbindungselement keine Daten übertragen und kann ein einfaches Seil sein.

Typische Längenveränderungen des Verbindungselements sind z.B. von wenigen cm im kontrahierten Zustand bis wenige Meter im expandierten Zustand. Die Längenveränderung des Verbindungselements liegt damit im Bereich von mindestens 50 % Ausdehnung. Typischerweise reicht eine Längenausdehnung um einen Faktor 250 allemal aus (z.B. 2 bis 5 cm werden zu 1 bis 5 m).

Vorzugsweise überträgt die elektronische Übertragungseinheit zum Übermitteln von Daten an eine mobile Ausleseeinheit Daten auf eine der folgenden Weisen:
- mittels Steckkontakt oder
- mittels eines Magnetstreifens oder
- mittels eines Transponders oder
- mittels Infrarot-Strahlung oder
- mittels Ultraschall.

Als Steckkontakt kann hier z.B. eine USB-Verbindung vorgesehen sein. Das Auslesen würde dann dadurch geschehen, dass ein Stecker des Lesegeräts kurzzeitig in einen USB-Anschluss an der elektronischen Übertragungseinheit gesteckt wird. Als Transponder kommen aktive oder passive Transponder in Frage, wobei aktive Transponder zusätzlich eine Energiequelle, wie z.B. eine Batterie, benötigen. Infrarot- oder Ultraschall-Systeme, wie sie von Fernbedienungen bekannt sind, können ebenso vorgesehen sein.

Besonders wird bevorzugt, dass die elektronische Übertragungseinheit zum Übermitteln von Daten ein RFID-Transponder ist. Dieser ist passiv und benötigt keine eigene Energiequelle. Diese Ausführung entspricht zudem der Spezifikation DIN SPEC 91406.

Wenn das flexible, längenveränderliche Verbindungselement ein Gummiband oder Gummiseil ist, ergibt sich eine besonders kostengünstige Variante der Mittel zum Kennzeichnen. Allerdings kann die Handhabung dadurch, dass sich das Gummiseil nicht weiter als bis zu einer vorgegebenen Mindestlänge zusammenzieht, etwas erschwert sein.

Die elektronische Übertragungseinheit kann selbsttätig vollständig zum Feldgerät zurücckehren, wenn das flexible, elastische, längenveränderliche Verbindungselement aus einem Seil oder Kabel und einer automatisch aufrollenden Trommel besteht, wobei das Seil oder Kabel auf der automatisch aufrollenden Trommel angeordnet ist. Der Aufrollmechanismus gestaltet sich besonders einfach, wenn die Trommel das Seil oder Kabel mittels einer Feder aufrollt.

Die elektronische Übertragungseinheit kann besonders kompakt gestaltet werden, wenn die automatisch aufrollende Trommel an dem Ende des Seils oder Kabels angeordnet ist, welches mit dem Feldgerät verbindbar ist.

Je nach Ausführung des Feldgerätes kann sich andererseits die Montage der Mittel zum Kennzeichnen vereinfachen, wenn die automatisch aufrollende Trommel an dem Ende des Seils oder Kabels angeordnet ist, an dem die elektronische Übertragungseinheit fixiert ist.

Ebenso vorteilhaft ist die Ausführungsform, bei der die automatisch aufrollende Trommel bidirektional aufrollt und am Seil oder Kabel mittig angeordnet ist.

Die Verbindung zwischen Feldgerät und der elektronischen Übertragungseinheit ist besonders stabil, wenn als Seil oder Kabel ein Drahtseil vorliegt.

Das Auslesen der Daten von der elektronischen Übertragungseinheit wird für den Anwender leichter, wenn die Übertragungseinheit ein Fixiermittel aufweist, welches dazu geeignet ist, die Übertragungseinheit zeitweise an einer mit einer mobilen Ausleseeinheit erreichbaren Position zu fixieren. Beispielsweise kann die elektronische Übertragungseinheit an einem Rohr, das vor dem Feldgerät verläuft und dieses verdeckt bzw. den Zugang zum Feldgerät erschwert, fixiert werden. Dieses Rohr kann leichter zugänglich sein, und durch das flexible, längenveränderliche Verbindungselement ist trotzdem eine eindeutige Zuordnung zum Feldgerät - und nicht zu der Rohrleitung - gewährleistet. Sind die Daten ausgelesen worden, kann die Fixierung aufgehoben werden, und die Übertragungseinheit kehrt selbsttätig zu dem Feldgerät zurück.

Besonders einfach gestaltet sich diese Ausführung, wenn das Fixiermittel ein Permanentmagnet ist.

Bei einer vorteilhaften Weiterbildung ist zudem ein Aufnahmemittel vorhanden, welches dazu geeignet ist, die Übertragungseinheit an einer mit einer mobilen Ausleseeinheit erreichbaren Position zu fixieren. Das Aufnahmemittel ist dabei an einem zugänglichen Bereich des Feldgeräts oder einer Anlage, die das Feldgerät als Komponente enthält, montiert. Es funktioniert also wie eine Art Docking-Station, an der die Übertragungseinheit angedockt werden kann, so dass sie auch über einen längeren Zeitraum an einer für eine Ablesung leicht zugänglichen Stelle fixiert bleiben kann.

Bei einer besonders einfachen, kostengünstigen Ausgestaltung sind die Fixiermittel und Aufnahmemittel als Klettflächen vorgesehen.

Eine weiterentwickelte Funktionalität der Mittel zum Kennzeichnen eines Feldgerätes ergibt sich, wenn das flexible, elastische, längenveränderliche Verbindungselement ein Kabel ist, welches eine Datenverbindung zwischen dem Feldgerät und der elektronischen Übertragungseinheit und/oder dem Datenträger ermöglicht. In diesem Fall sind zusätzliche Funktionen wie das Auslesen von weitergehenden Daten zum Feldgerät oder zu dessen Steuerung möglich. Insbesondere können Daten ausgelesen werden, die zeitlich veränderlich sind.

Hat die elektronische Übertragungseinheit mindestens einen Sensor zum Überwachen des Feldgerätes, so lassen sich z.B. diese Überwachungsdaten auf dem Datenträger speichern. Dies erleichtert z.B. die Kontrolle des Betriebszustandes des Feldgerätes, insbesondere, wenn das Feldgerät und/oder seine Steuer- bzw. Bedieneinheit schwer zugänglich sind.

Vorzugsweise ist die elektronische Übertragungseinheit zudem in der Lage, Meldungen zu erzeugen und/oder auszugeben. Dadurch kann insbesondere vor unerwünschten Betriebszuständen oder Fehlfunktionen am Feldgerät gewarnt oder eine Wartung angefordert werden.

Falls die elektronische Übertragungseinheit ein Display und/oder Bedienelemente für das Feldgerät aufweist, lässt sich das Feldgerät von dieser Übertragungseinheit aus konfigurieren und steuern. Dies ist insbesondere dann vorteilhaft, wenn nicht nur das Feldgerät selbst, sondern auch dessen normale Bedieneinheit schwer zugänglich ist. Besonders vorteilhaft ist diese Ausgestaltung in Kombination mit einer Docking-Station, wie sie weiter oben beschrieben wurde.

Eine vereinfachte Zuordnung und Kennzeichnung wird ermöglicht, wenn die elektronische Übertragungseinheit außerdem eine sichtbare Kennzeichnung aufweist, die dem Feldgerät eindeutig zugeordnet werden kann. Dabei kann es sich schlicht um eine Nummer oder Namensbezeichnung des Feldgeräts handeln. Diese kann allerdings auch als Barcode, QR-Code oder ähnliches codiert sein. Für den Fall, dass eine Docking-Station, wie sie weiter oben beschrieben wurde, vorliegt, die dem Feldgerät fest zugeordnet ist, kann diese sichtbare Kennzeichnung außerdem Informationen zur genauen Position des Feldgeräts bzw. zum Zugangsweg zum Feldgerät enthalten.

Die Aufgabe wird zudem gelöst durch ein Feldgerät einer prozesstechnischen Anlage mit Mitteln zum Kennzeichnen des Feldgeräts, wie sie bereits beschrieben wurden.

Ferner wird die Aufgabe gelöst durch ein Feldgerät einer prozesstechnischen Anlage mit einem flexiblen, längenveränderlichen Verbindungselement und einer elektronischen Übertragungseinheit zum Übermitteln von Daten an eine mobile Ausleseeinheit. Dabei sind die Daten auf einem Datenträger gespeichert und enthalten Informationen über das Feldgerät. Die Übertragungseinheit ist an einem Ende des Verbindungselements fixiert, das andere Ende des Verbindungselements ist mit dem Feldgerät verbunden.

Ein solches Feldgerät ist eindeutig gekennzeichnet, und zugleich ist die Kennzeichnung mit herkömmlichen Methoden ablesbar, da die Übertragungseinheit zum Ablesegerät hingezogen werden kann. Durch das flexible, längenveränderliche Verbindungselement bleibt die Übertragungseinheit stets mit dem Feldgerät verbunden und kann außerdem nach dem Ablesen selbsttätig in eine Ruhe- bzw. Aufbewahrungsposition am oder in unmittelbarer Nähe zum Feldgerät zurückkehren.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: eine schematische Darstellung eines Feldgerätes mit einer ersten Ausführungsform der Mittel zum Kennzeichnen, die ein Display bzw. eine Bedieneinheit und eine Docking-Station aufweist;
- Fig. 2: eine schematische Darstellung eines Feldgerätes mit einer zweiten Ausführungsform der Mittel zum Kennzeichnen, die eine zentrale, bidirektional aufrollende Aufrolltrommel aufweist; und
- Fig. 3: eine schematische Darstellung eines Feldgerätes mit einer dritten Ausführungsform der Mittel zum Kennzeichnen, bei der eine Aufrolltrommel am Feldgerät angeordnet ist.

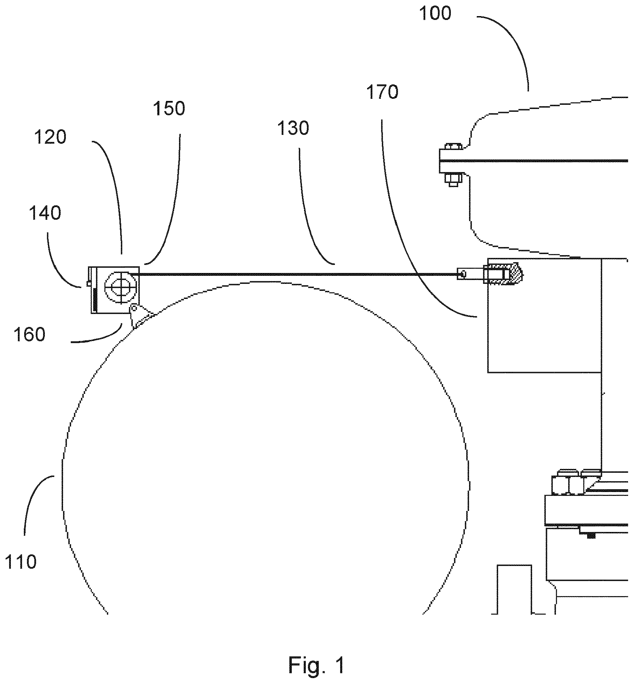

Bei einer ersten Ausführungsform der Mittel zum Kennzeichnen eines Feldgerätes 100, die in Fig. 1 dargestellt ist, ist die elektronische Übertragungseinheit 120 mittels eines Datenkabels 130 an einer selbstaufrollenden Trommel 150 mit dem Feldgerät 100 verbunden. Genauer genommen ist die elektronische Übertragungseinheit mit der Steuerungseinheit 170 des Feldgerätes verbunden. Die selbstaufrollende Trommel sitzt direkt an der Übertragungseinheit. Diese weist neben dem eigentlichen Übertragungsmittel mit einem Datenträger (nicht dargestellt) auch ein Display bzw. eine Bedieneinheit 140 für das Feldgerät 100 auf. Das Feldgerät 100 ist in diesem Fall hinter einer Rohrleitung 110 angeordnet, so dass die Bedieneinheit der Steuerung 170 des Feldgerätes (nicht dargestellt) nicht ohne Weiteres zugänglich ist, da sie durch die Rohrleitung verdeckt wird. Auf der vorderen oberen Seite der Rohrleitung 110 ist eine Docking-Station 160 montiert. Diese kann fest mit der Rohrleitung verbunden sein (z.B. angeschweißt), oder auch fixiert, aber lösbar, beispielsweise durch einen in der Docking-Station eingebauten Magneten, oder durch Schrauben, Klemmen oder ähnliche lösbare Fixiermittel. Letzteres wird bevorzugt. Die elektronische Übertragungseinheit 120 ist in die Docking-Station 160 eingesetzt. Sie sitzt dort sicher und für Bediener bzw. Ableser jederzeit leicht zugänglich, kann aber bei Bedarf leicht herausgenommen und z.B. dichter an ein Ablesegerät herangeführt werden oder zurück an das Feldgerät bewegt werden. Letzteres kann durch den Aufrollmechanismus der selbstaufrollenden Trommel 150 sogar selbsttätig erfolgen. Durch die Datenverbindung mittels des Datenkabels 130 kann die Bedieneinheit 140 die Funktion der Bedieneinheit an der Steuerung des Feldgerätes übernehmen.

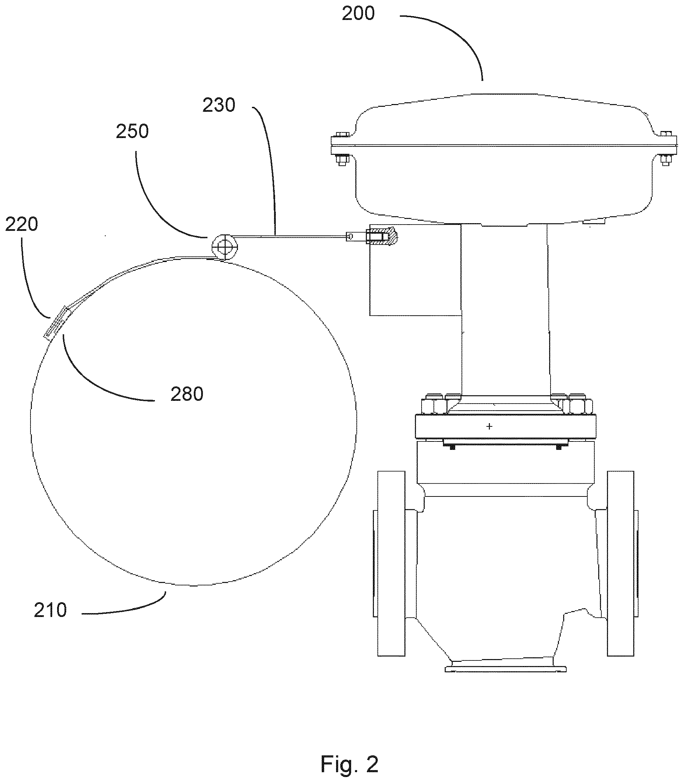

In Fig. 2 ist eine zweite Ausführungsform der Mittel zum Kennzeichnen eines Feldgerätes 200 dargestellt. Auch in diesem Fall ist das Feldgerät 200 hinter einer Rohrleitung 210 verdeckt angeordnet, so dass es nicht ohne Weiteres zugänglich ist. Die Mittel zum Kennzeichnen haben eine elektronische Übertragungseinheit 220, vorzugsweise einen RFID-Transponder enthaltend, welche mit einem flexiblen, elastischen, längenveränderlichen Verbindungselement verbunden ist. Dieses besteht beispielsweise aus einem Seil 230 mit einer mittig angeordneten bidirektional aufrollenden Aufrolltrommel 250. Diese rollt selbsttätig auf, z.B. mittels einer Feder. Sie kann zusätzlich über einen Verrastmechanismus verfügen (nicht dargestellt), der ähnlich funktioniert wie bei einem Kugelschreiber. Solche Verrastmechanismen sind z.B. von Computer-Mäusen bekannt. Als Seil kann wegen der höheren Stabilität bevorzugt ein Drahtseil Verwendung finden. Die elektronische Übertragungseinheit 220 kann mittels eines eingebauten Magneten 280 z.B. an der Vorderseite der Rohrleitung 210 lösbar fixiert werden. Sie ist dann jederzeit sichtbar und zugänglich und kann leicht abgelesen werden. Zum Auslesen der Daten kann sie aber auch von der Rohrleitung 210 gelöst und zum Auslesegerät hingezogen werden. Mit der Seilverbindung 230 bleibt die elektronische Übertragungseinheit 220 fest mit dem Feldgerät 200 verbunden und diesem zugeordnet. Durch Aufrollen des Seils 230 mittels der Trommel 250 kann diese Zuordnung außerdem jederzeit nachvollzogen werden.

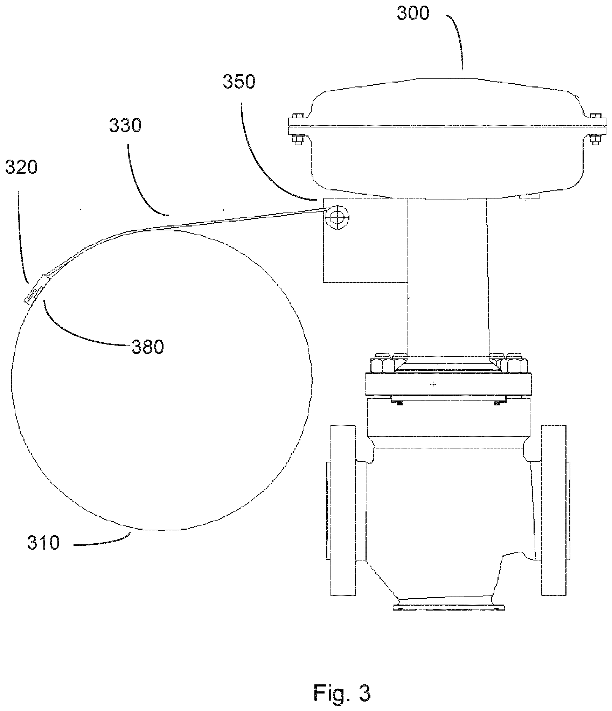

Eine dritte Ausführungsform der Mittel zum Kennzeichnen eines Feldgerätes 300 ist in Fig. 3 dargestellt. Diese ähnelt stark der zweiten Ausführungsform. Auch hier ist das Feldgerät 300 durch eine Rohrleitung 310 verdeckt. Die elektronische Übertragungseinheit 320 ist mittels eines Seils 330, z.B. eines Drahtseils, mit dem Feldgerät verbunden. Eine automatisch aufrollende Trommel 350 ist in diesem Fall an dem Ende des Seils, das dem Feldgerät am nächsten ist, angebracht. Diese Trommel wird am Feldgerät 300 montiert. Mittels eines eingebauten Magneten 380 kann die elektronische Ausleseeinheit 320 z.B. an der Vorderseite der Rohrleitung lösbar fixiert werden, wo eine leichte Ab- und Auslesbarkeit gegeben ist.

Ein zentraler Gedanke bei allen Ausführungsformen ist, dass beispielsweise ein RFID-Transponder unverlierbar, aber abnehmbar an einem Feldgerät befestigt sein soll. Es wird also nicht an einem mobilen Auslesegerät eine Verlängerung des Lesekopfes bereitgestellt, sondern der Transponder wird vom Feldgerät flexibel an zugänglicheren Stellen gebracht und dort fixiert. Von dort aus kann der Transponder sehr leicht näher an ein Auslesegerät herangezogen werden.

Mittels eines aufrollbaren Seilzuges (ähnlich wie bei einem Jo-Jo, aber mit Aufrollmechanismus, z.B. einer Feder) wird der Transponder mit dem Feldgerät fest verbunden. Der Transponder kann dann entweder zum Auslesen an das Auslesegerät herangezogen werden, oder der Transponder wurde bereits, z.B. mittels eines Magneten, an einem Anlagenteil fixiert, welcher mit einem Auslesegerät gut erreichbar ist. Letzteres wird bevorzugt, wenn das Feldgerät an einer besonders schwer zugänglichen Stelle angeordnet ist. Anhand der Kabel- bzw. Seilverbindung ist die Zuordnung zu einem bestimmten Feldgerät eindeutig. Für eine sichere Zuordnung kann die Transpondereinheit zusätzlich gekennzeichnet sein. Durch einen Magneten oder andere Fixiermittel kann der Transponder in der Anlage an eine geeignete, zum Ab- und Auslesen leicht zugängliche Stelle gesetzt werden. Von dieser Stelle aus kann die Transpondereinheit auch weiter Richtung des Auslesegerätes gezogen werden und nach dem Auslesen selbsttätig oder durch den Bediener geführt zurückkehren. Das Fixierelement kann auch von der Transpondereinheit trennbar sein. So wird sichergestellt, dass die Transpondereinheit nach dem Auslesen immer wieder an dieselbe Stelle der Anlage zurückkehrt.

Der aufrollbare Seilzug kann mit einem Drahtseil ausgestattet sein und somit kann die Transpondereinheit unverlierbar am Feldgerät befestigt werden. Anstatt eines Drahtseiles kann auch eine aufrollbare Kabelverbindung vorgesehen sein. Damit ist ein Datenaustausch mit dem Feldgerät möglich. Eine solche Verbindung ermöglicht unter anderem, fest gespeicherte Feldgerätedaten, z.B. Identifikationsdaten, aber auch Diagnosedaten oder sonstige veränderliche Daten zu übermitteln. Hierfür werden Daten vom Feldgerät über die Kabelverbindung zum Transponder bzw. einem mit diesem integrierten Datenträger übermittelt. Es sind natürlich auch andere Übertragungsmittel als ein Transponder denkbar, z.B. Infrarot- oder Ultraschall-Sender bzw. -Empfänger, oder sogar eine USB-Steckverbindung oder Ähnliches. Der Datenaustauch kann auch bidirektional von dem Auslesegerät zur Übertragungseinheit zu dem Feldgerät erfolgen.

Es kann auch eine Docking-Station für den Transponder vorgesehen sein, also eine feste Station an einer zugänglichen Stelle der Anlage, in die der Transponder eingesetzt werden kann. Die Dockingstation für die Übertragungseinheit oder die Übertragungseinheit selbst kann auch mit mindestens einem Signalgeber ausgestattet sein, welcher bei einer Fehlfunktion oder sonstigen Ereignissen eine Meldung ausgibt. Die Dockingstation oder die Übertragungseinheit selbst kann auch mit mindestens einem Sensor ausgestattet sein, welcher physikalische Werte in der Anlage erfasst, diese speichert (z.B. auf dem integrierten Datenträger) und die Werte bzw. eine Fehlermeldung, z.B. bei Über- oder Unterschreitung von Schwellwerten, ausgibt. Bei schwer zugänglichen oder weit abgelegenen Feldgeräten können die Displays und/oder Bedieneinheiten häufig weder bedient noch die Zustände auf dem Display abgelesen werden. Für solche Fälle kann das gesamte Display mit Bedienelementen in der Übertragungseinheit integriert werden. Dann lässt sich diese Zweit-Bedieneinheit leicht an eine günstigere Position zum Auslesen bringen und dort, beispielsweise mittels der vorgenannten Docking-Station, auch längerfristig bereitstellen.

### Glossar

### Feldgerät

Ein Feldgerät ist eine technische Einrichtung im Bereich der Automatisierungstechnik, die mit einem Produktionsprozess in direkter Beziehung steht. "Feld" bezeichnet in der Automatisierungstechnik den Bereich außerhalb von Schaltschränken bzw. Leitwarten. Feldgeräte können somit sowohl Aktoren (Stellglieder, Ventile etc.) als auch Sensoren (z.B. Messumformer) in der Fabrik- und Prozessautomation sein.

### Transponder

Ein Transponder ist ein Funk-Kommunikationsgerät, das eingehende Signale aufnimmt und automatisch beantwortet bzw. weiterleitet.

### passiver Transponder

Unter passiven Transpondern versteht man Systeme, die zur Kommunikation und zur Abarbeitung interner Prozesse benötigte Energie ausschließlich aus dem Feld der Sende-/Empfangseinheit beziehen. Passive Transponder benötigen keine eigene Stromversorgung, können aber nur auf kurze Distanzen arbeiten. Bekannteste Bauart ist die *Radio Frequency Identification* (RFID). Typische Anwendungen sind die Identifizierung von Objekten, Haustierregistrierungs-Chips oder Chipkarten und Schlüsselanhänger für ein Zugangs-Kontrollsystem. Ein aktiver Sensor (in Verbindung mit einem Computer) liest und decodiert die Daten, die der passive Transponder sendet.

### aktiver Transponder

Aktive Transponder verfügen über eine eigene Energieversorgung. Entweder haben sie eine eingebaute Batterie (oder z.B. einen Kondensator) oder werden an ein externes Stromnetz angeschlossen. Dadurch sind nicht nur größere Kommunikationsreichweiten möglich, auch die Verwaltung größerer Datenspeicher bzw. der Betrieb integrierter Sensorik wird realisierbar. Einfache aktive Transponder werden zum Beispiel bei der Identifizierung von Flugzeugen verwendet: Der im Flugzeug eingebaute Transponder empfängt ein kodiertes Signal einer Überwachungs- und Kontrollstelle und beantwortet dieses Signal auf einer vorgegebenen Frequenz. Dieses Antwortsignal wird von der Überwachungsstelle empfangen und mit dem Radarecho zusammen dargestellt.

### Bezugszeichen

- 100: Feldgerät
- 110: Rohrleitung
- 120: elektronische Übertragungseinheit
- 130: flexibles, elastisches, längenveränderliches Verbindungselement, Kabel
- 140: Bedieneinheit
- 150: Aufrolltrommel
- 160: Aufnahmemittel
- 170: Steuerungseinheit des Feldgeräts
- 200: Feldgerät
- 210: Rohrleitung
- 220: elektronische Übertragungseinheit
- 230: flexibles, elastisches, längenveränderliches Verbindungselement
- 250: Aufrolltrommel
- 280: Magnet
- 300: Feldgerät
- 310: Rohrleitung
- 320: elektronische Übertragungseinheit
- 330: flexibles, elastisches, längenveränderliches Verbindungselement
- 350: Aufrolltrommel
- 380: Magnet

### zitierte Literatur

### zitierte Patentliteratur

CN 210 164 346 U
GB 2 480 622 A
US 2010/0001837 A1
US 2013/0161363 A1
WO 99/010673 A1

### zitierte Nicht-Patentliteratur

DIN SPEC 91406

## Patentansprüche

1. Mittel zum Kennzeichnen eines Feldgerätes (100; 200; 300), wobei die Mittel zum Kennzeichnen Folgendes aufweisen:
1.1 ein flexibles, längenveränderliches Verbindungselement (130, 150; 230, 250; 330, 350), das derart ausgestaltet ist, dass es nach einer Längenveränderung zu seiner Ausgangslänge zurückkehrt;
1.2 eine elektronische Übertragungseinheit (120; 220; 320) zum Übermitteln von Daten an eine mobile Ausleseeinheit;
1.2.1 einen Datenträger; wobei die Daten auf dem Datenträger gespeichert sind und Informationen über das Feldgerät (100; 200; 300) enthalten;
1.3 wobei die Übertragungseinheit (120; 220; 320) an einem Ende des Verbindungselements fixiert ist;
1.4 wobei das andere Ende des Verbindungselements mit dem Feldgerät (100; 200; 300) verbindbar ist;
**dadurch gekennzeichnet,**
1.5 dass die elektronische Übertragungseinheit (120; 220; 320)
1.5.1 das Auslesen von Daten des Feldgerätes (100; 200; 300) und/oder seiner Steuerung und / oder
1.5.2 das Übermitteln von Daten an die Steuerung des Feldgerätes (100; 200; 300) zu ihrer Konfiguration ermöglicht.

2. Mittel nach dem vorhergehenden Anspruch,
**dadurch gekennzeichnet,**
**dass** die Länge des Verbindungselements um mindestens 50 % veränderlich ist.

3. Mittel nach einem der vorhergehenden Ansprüche,
**dadurch gekennzeichnet,**
3.1 dass die elektronische Übertragungseinheit (120; 220; 320) zum Übermitteln von Daten an eine mobile Ausleseeinheit Daten auf eine der folgenden Weisen überträgt:
3.2.1 mittels Steckkontakt oder
3.2.2 mittels eines Magnetstreifens oder
3.2.3 mittels eines Transponders oder
3.2.4 mittels Infrarot-Strahlung oder
3.2.5 mittels Ultraschall.

4. Mittel nach dem vorhergehenden Anspruch,
**dadurch gekennzeichnet,**
**dass** die elektronische Übertragungseinheit (120; 220; 320) zum Übermitteln von Daten ein RFID-Transponder ist.

5. Mittel nach einem der vorhergehenden Ansprüche,
**dadurch gekennzeichnet,**
**dass** das flexible, längenveränderliche Verbindungselement ein Gummiband oder Gummiseil ist.

6. Mittel nach einem der Ansprüche 1 bis 4,
**dadurch gekennzeichnet,**
6.1 dass das flexible, längenveränderliche Verbindungselement aus einem Seil oder Kabel (130; 230; 330) und einer automatisch aufrollenden Trommel (150; 250; 350) besteht;
6.2 wobei das Seil oder Kabel auf der automatisch aufrollenden Trommel angeordnet ist;
6.3 wobei die automatisch aufrollende Trommel (150; 250; 350) entweder
6.3.1 an dem Ende des Seils oder Kabels (330) angeordnet ist, welches mit dem Feldgerät (300) verbindbar ist; oder
6.3.2 an dem Ende des Seils oder Kabels (130) angeordnet ist, an dem die elektronische Übertragungseinheit (120) fixiert ist; oder
6.3.3 bidirektional aufrollt und am Seil oder Kabel (230) mittig angeordnet ist.

7. Mittel nach einem der vorhergehenden Ansprüche,
**dadurch gekennzeichnet,**
**dass** die Übertragungseinheit (120; 220; 320) ein Fixiermittel (280; 380) aufweist, welches dazu geeignet ist, die Übertragungseinheit (120; 220; 320) an einer mit einer mobilen Ausleseeinheit erreichbaren Position zu fixieren.

8. Mittel nach dem vorhergehenden Anspruch,
**dadurch gekennzeichnet,**
**dass** das Fixiermittel (280; 380) ein Permanentmagnet ist.

9. Mittel nach einem der vorhergehenden Ansprüche,
**gekennzeichnet durch**
9.1 ein Aufnahmemittel (160), welches dazu geeignet ist, die Übertragungseinheit (120) an einer mit einer mobilen Ausleseeinheit erreichbaren Position zu fixieren; wobei
9.2 das Aufnahmemittel (160) an einem zugänglichen Bereich des Feldgeräts oder einer Anlage, die das Feldgerät als Komponente enthält, montiert ist.

10. Mittel nach dem vorhergehenden Anspruch,
**dadurch gekennzeichnet,**
**dass** als Fixiermittel und als Aufnahmemittel Klettflächen vorgesehen sind.

11. Mittel nach Anspruch 6,
**dadurch gekennzeichnet,**
11.1 dass das flexible, elastische, längenveränderliche Verbindungselement ein Kabel (130) ist;
11.2 wobei das Kabel eine Datenverbindung zwischen dem Feldgerät (100) und der elektronischen Übertragungseinheit (120) und/oder dem Datenträger ermöglicht.

12. Mittel nach einem der vorhergehenden Ansprüche,
**dadurch gekennzeichnet,**
**dass** die elektronische Übertragungseinheit mindestens einen Sensor zum Überwachen des Feldgerätes aufweist.

13. Mittel nach einem der vorhergehenden Ansprüche,
**dadurch gekennzeichnet,**
**dass** die elektronische Übertragungseinheit in der Lage ist, Meldungen zu erzeugen und/oder auszugeben.

14. Mittel nach einem der vorhergehenden Ansprüche,
**dadurch gekennzeichnet,**
**dass** die elektronische Übertragungseinheit (120) ein Display und/oder Bedienelemente (140) für das Feldgerät (100) aufweist.

15. Feldgerät (100; 200; 300) einer prozesstechnischen Anlage mit Mitteln zum Kennzeichnen gemäß Anspruch 1.

## Claims

1. Means for identifying a field device (100; 200; 300), the means for identifying comprising:
1.1 a flexible, variable-length connecting element (130, 150; 230, 250; 330, 350) which is so designed that it returns to its initial length after a change in length;
1.2 an electronic transmission unit (120; 220; 320) for transmitting data to a mobile read-out unit;
1.2.1 a data carrier; wherein the data is stored on the data carrier and contains information about the field device (100; 200; 300);
1.3 wherein the transmission unit (120; 220; 320) is fixed to one end of the connecting element;
1.4 wherein the other end of the connecting element is connectable to the field device (100; 200; 300);
**characterised in that**
1.5 the electronic transmission unit (120; 220; 320)
1.5.1 enables the reading of data of the field device (100; 200; 300) and/or its control and / or
1.5.2 the transmission of data to the control of the field device (100; 200; 300) for its configuration.

2. Means according to the preceding claim,
**characterised in that**
the length of the connecting element is variable by at least 50 %.

3. Means according to one of the preceding claims,
**characterised in that**
3.1. the electronic transmission unit (120; 220; 320) for transmitting data to a mobile read-out unit transmits data in one of the following ways:
3.2.1 by a plug-in contact or
3.2.2 by a magnetic strip or
3.2.3 by a transponder or
3.2.4. by infrared radiation or
3.2.5. by ultrasound.

4. Means according to the preceding claim,
**characterised in that**
the electronic transmission unit (120; 220; 320) for transmitting data is an RFID transponder.

5. Means according to one of the preceding claims,
**characterised in that**
the flexible, variable-length connecting element is a rubber band or rubber rope.

6. Means according to one of the claims 1 to 4,
**characterised in that**
6.1 the flexible, variable-length connecting element consists of a rope or cable (130; 230; 330) and an automatically winding drum (150; 250; 350);
6.2 wherein the rope or cable is arranged on the automatically winding drum;
6.3. said automatically winding drum (150; 250; 350) either
6.3.1 being arranged at the end of the rope or cable (330) which is connectable to the field device (300); or
6.3.2 being arranged at the end of the cable (130) to which the electronic transmission unit (120) is fixed; or
6.3.3 rolling up bi-directionally and being arranged centrally on the rope or cable (230).

7. Means according to one of the preceding claims,
**characterised in that**
the transmission unit (120; 220; 320) has a fixing means (280; 380) which is suitable for fixing the transmission unit (120; 220; 320) in a position which is accessible by a mobile read-out unit.

8. Means according to the preceding claim,
**characterised in that**
the fixing means (280; 380) is a permanent magnet.

9. Means according to one of the preceding claims,
**characterised by**
9.1 a mounting means (160) adapted to fix the transmission unit (120) at a position accessible by a mobile read-out unit; wherein
9.2 the mounting means (160) are mounted on an accessible area of the field device or of an installation containing the field device as a component.

10. Means according to the preceding claim,
**characterised in that**
Velcro surfaces are provided as fixing means and as mounting means.

11. Means according to claim 6,
**characterised in that**
11.1 the flexible, elastic, variable-length connecting element is a cable (130);
11.2 wherein the cable enables a data connection between the field device (100) and the electronic transmission unit (120) and/or the data carrier.

12. Means according to one of the preceding claims,
**characterised in that**
the electronic transmission unit has at least one sensor for monitoring the field device.

13. Means according to one of the preceding claims,
**characterised in that**
the electronic transmission unit is capable of generating and/or outputting messages.

14. Means according to one of the preceding claims,
**characterised in that**
the electronic transmission unit (120) has a display and/or operating elements (140) for the field device (100).

15. Field device (100; 200; 300) of a process plant having means for identification according to claim 1.

## Revendications

1. Moyen de marquage d'un appareillage (100 ; 200 ; 300), le moyen de marquage comprenant ce qui suit :
1.1 un élément de liaison flexible à longueur variable (130, 150 ; 230, 250 ; 330, 350), qui est conçu de telle sorte qu'il revienne à sa longueur initiale après une modification de longueur ;
1.2 une unité de transmission électronique (120 ; 220 ; 320) pour la transmission de données à une unité de lecture mobile ;
1.2.1 un support de données, les données étant enregistrées sur le support de données et contenant des informations sur l'appareillage (100 ; 200 ; 300) ;
1.3 l'unité de transmission (120 ; 220 ; 320) étant fixée à une extrémité de l'élément de liaison ;
1.4 l'autre extrémité de l'élément de liaison pouvant être reliée à l'appareillage (100 ; 200 ; 300) ; **caractérisé en ce**
1.5 que l'unité de transmission électronique (120 ; 220 ; 320)
1.5.1 permet la lecture de données de l'appareillage (100 ; 200 ; 300) et/ou de sa commande et / ou
1.5.2 permet la transmission de données à la commande de l'appareillage (100 ; 200 ; 300) pour sa configuration.

2. Moyen selon la revendication précédente,
**caractérisé en ce**
**que** la longueur de l'élément de liaison est variable d'au moins 50 %.

3. Moyen selon l'une quelconque des revendications précédentes,
**caractérisé en ce**
3.1 que l'unité de transmission électronique (120 ; 220 ; 320) destinée à transmettre des données à une unité de lecture mobile transmet des données selon une des manières suivantes :
3.2.1 au moyen d'un contact à fiche ou
3.2.2 au moyen d'une bande magnétique ou
3.2.3 au moyen d'un transpondeur ou
3.2.4 au moyen d'un rayonnement infrarouge ou
3.2.5 au moyen d'ultrasons.

4. Moyen selon la revendication précédente,
**caractérisé en ce que**
l'unité de transmission électronique (120 ; 220 ; 320) pour la transmission de données est un transpondeur RFID.

5. Moyen selon l'une quelconque des revendications précédentes,
**caractérisé en ce que**
l'élément de connexion flexible et de longueur variable est un élastique ou un câble élastique.

6. Moyen selon l'une quelconque des revendications 1 à 4,
**caractérisé en ce que**
6.1 l'élément de liaison flexible à longueur variable est constitué d'une corde ou d'un câble (130 ; 230 ; 330) et d'un tambour à enroulement automatique (150 ; 250 ; 350) ;
6.2 le câble ou la corde étant disposé(e) sur le tambour à enroulement automatique ;
6.3 le tambour d'enroulement automatique (150 ; 250 ; 350) étant disposé soit
6.3.1 à l'extrémité du câble ou de la corde (330) qui peut être reliée à l'appareillage (300) ; ou bien
6.3.2 à l'extrémité du câble ou de la corde (130) à laquelle est fixée l'unité de transmission électronique (120) ; ou bien
6.3.3 s'enroule de manière bidirectionnelle et est disposé au centre de la corde ou du câble (230).

7. Moyen selon l'une des revendications précédentes,
**caractérisé en ce**
**que** l'unité de transmission (120 ; 220 ; 320) comporte un moyen de fixation (280 ; 380) apte à fixer l'unité de transmission (120 ; 220 ; 320) dans une position accessible par une unité de lecture mobile.

8. Moyen selon la revendication précédente,
**caractérisé en ce que**
le moyen de fixation (280 ; 380) est un aimant permanent.

9. Moyen selon l'une des revendications précédentes,
**caractérisé par**
9.1 un moyen de réception (160) apte à fixer l'unité de transmission (120) dans une position accessible par une unité de lecture mobile ; dans lequel
9.2 le moyen de réception (160) est monté sur une zone accessible de l'appareillage ou d'une installation qui contient l'appareillage comme composant.

10. Moyen selon la revendication précédente,
**caractérisé en ce que,**
des surfaces Velcro sont prévues comme moyen de fixation et comme moyen de réception.

11. Moyen selon la revendication 6,
**caractérisé en ce que**
11.1 l'élément de liaison flexible, élastique et de longueur variable est un câble (130) ;
11.2 le câble permettant une liaison de données entre l'appareillage (100) et l'unité de transmission électronique (120) et/ou le support de données.

12. Moyen selon l'une des revendications précédentes,
**caractérisé en ce que**
l'unité de transmission électronique comprend au moins un capteur pour surveiller l'appareillage.

13. Moyen selon l'une des revendications précédentes,
**caractérisé en ce que**
l'unité de transmission électronique est apte à générer et/ou à émettre des messages.

14. Moyen selon l'une des revendications précédentes,
**caractérisé en ce que**
l'unité de transmission électronique (120) comporte un écran et/ou des éléments de commande (140) pour l'appareillage (100).

15. Appareillage (100 ; 200 ; 300) d'une installation technique de process comportant des moyens de marquage selon la revendication 1.
